# EUROPEAN PATENT APPLICATION

(11) **EP 4 841 930 A1**
(43) Date of publication of application: **18.11.2026**
(21) Application number: 25176759.6
(22) Date of filing: 15.05.2025
(51) Int. Cl.: H04L 9/08

(54) **HYBRID QUANTUM-CLASSICAL QKD REPEATER SYSTEM**

(71) Applicant: Nederlandse Organisatie voor toegepast-natuurwetenschappelijk onderzoek TNO, 2595 DA 's-Gravenhage (NL)
(72) Inventor: The designation of the inventor has not yet been filed
(74) Representative: Nederlandsch Octrooibureau

(57) **Abstract**

The present disclosure provides a first intermediate device (160) for quantum key distribution between a first device (110) and a second device (180). The first intermediate device (160) receives a first set of symbols from a second intermediate device (140) over a first trusted non-quantum channel (246; 346), generates a second set of symbols based on information exchanged with the second device (180) over a second quantum channel (136), generates a third set of symbols by performing an operation using the first and second sets of symbols, and transmits the third set of symbols to the second device (180) over a third non-quantum channel (132). The second device (180) generates a fourth set of symbols using the third set and another second set of symbols. The first and second devices (110, 180) exchange administrative information over a second non-quantum channel (130) to correlate symbols from the fourth set and another first set of symbols at the first device (110).

## Description

### FIELD OF INVENTION

The present disclosure relates to quantum key distribution networks, and more particularly to a system, device, and method for performing quantum key distribution between end nodes using intermediate devices.

### BACKGROUND

Quantum key distribution (QKD) is a cryptographic technique that leverages principles of quantum mechanics to enable secure communication between parties. QKD systems typically involve the transmission of quantum states, such as polarized photons, over optical channels. These systems aim to generate shared secret keys between communicating parties that can be used for encrypting and decrypting messages. There exist many types of QKD systems, e.g. prepare-and-measure QKD, measurement-device independent (MDI) QKD, and entanglement based QKD. Some of these techniques feature mid-point devices, like Bell-state measurement or entangled-photon-pair source. All QKD systems have in common that they generate a set of symbols that are substantially the same at the two ends of a QKD link, and that further processing is performed (e.g. sifting, information reconciliation, error correction, privacy amplification) to assure that the set of symbols at the two ends are exactly the same.

Traditional QKD networks often employ trusted nodes to extend the range of the network beyond the limitations of direct quantum links. These trusted nodes act as intermediaries, performing key relay functions to establish secure keys between distant end nodes. The trusted nodes receive quantum states, measure them, and then retransmit new quantum states, effectively creating a chain of quantum links.

While trusted node architectures have enabled the expansion of QKD networks, they introduce potential vulnerabilities. Each trusted node in the network has access to the full key material, which increases the attack surface and requires stringent physical security measures at every intermediate location. Additionally, the processing requirements at trusted nodes can be computationally intensive, leading to increased complexity and resource consumption.

Another challenge in QKD networks is the trade-off between security and efficiency. As the number of intermediate nodes increases, the overall key rate tends to decrease due to accumulated losses and processing overhead at each node. This can limit the practical scalability of QKD networks, particularly over long distances or in complex network topologies.

Furthermore, integrating QKD systems with existing classical communication infrastructure presents technical hurdles. The coexistence of quantum and classical signals in the same optical channels can lead to interference and degradation of quantum states, potentially compromising the security guarantees of the QKD protocol.

It has been appreciated that a system is needed that overcomes one or more of these problems.

### SUMMARY

This Summary is provided to introduce a selection of concepts in a simplified form that are further described below in the Detailed Description.

In a first aspect, a first intermediate device for quantum key distribution between a first device and a second device is provided. The first intermediate device is configured to: receive, over a first trusted non-quantum channel from a second intermediate device, a first set of symbols generated at the second intermediate device, wherein the first set of symbols is substantially similar to another first set of symbols generated at the first device, and wherein the first set of symbols and the another first set of symbols have been generated based on first information exchanged between the second intermediate device and the first device over a first quantum channel; generate a second set of symbols substantially similar to another second set of symbols generated at the second device, wherein the second set of symbols and the another second set of symbols have been generated based on second information exchanged between the first intermediate device and the second device over a second quantum channel; generate a third set of symbols based on performing an operation using the first set of symbols and the second set of symbols; and transmit the third set of symbols to the second device over a third non-quantum channel; wherein the second device is configured to generate a fourth set of symbols based on performing an operation using the another second set of symbols and the third set of symbols; and wherein the first device and the second device are configured to exchange administrative information over the second non-quantum channel, to correlate symbols from the fourth set of symbols at the second device and the another first set of symbols at the first device.

This configuration allows for secure quantum key distribution over extended distances by utilizing intermediate devices, while maintaining end-to-end security between the first and second devices. The use of trusted non-quantum channels between intermediate devices enables the system to overcome distance limitations inherent in direct quantum communication, as the result of this configuration is that the correlated fourth set of symbols at the second device is substantially the same as the another first set of symbols at the first device. Subsequently, the first and second device can perform further QKD processing (e.g. sifting, information reconciliation, error correction, privacy amplification) to generate a fifth set of symbols at first device, and another fifth set of symbols at the second devices, where said fifth set of symbols and said another fifth set of symbols are exactly the same, and can be used as shared secret keys between communicating parties.

The first set of symbols and/or the second set of symbols may comprise sifted symbols and/or raw symbols.

Using sifted or raw symbols allows for efficient processing and transmission of quantum key information, reducing the computational load on the intermediate devices.

The first trusted non-quantum channel may comprise a trusted optical fiber.

Utilizing a trusted optical fiber provides a secure and high-performing connection between intermediate devices, enabling efficient transmission of symbol sets over long distances.

The first trusted non-quantum channel may comprise a cryptographically protected channel.

Implementing a cryptographically protected channel adds an additional layer of security to the communication between intermediate devices, further enhancing the overall security of the quantum key distribution system.

The operation performed may comprise an exclusive OR, XOR, operation and/or a negative XOR, NXOR, operation.

Using XOR or NXOR operations allows for efficient combination of symbol sets, facilitating the generation of secure keys while maintaining information-theoretic security.

The first intermediate device, in coordination with the second device, using the second quantum channel, may be further configured to perform error correction and/or privacy amplification on the second set of symbols.

Performing error correction and privacy amplification at the intermediate device level can improve the quality and security of the generated keys before they are transmitted to the end devices.

The first intermediate device may be further configured to authenticate the first set of symbols received from the second intermediate device.

Authentication of received symbols enhances the security of the system by ensuring that the symbols originate from a trusted source and have not been tampered with during transmission.

The first intermediate device may be further configured to encrypt the third set of symbols before transmitting to the second device.

Encrypting the third set of symbols provides an additional layer of security during transmission to the second device, protecting against potential eavesdropping on the non-quantum channel.

The first quantum channel and the second quantum channel may use different quantum key distribution protocols.

Allowing for different quantum key distribution protocols on different channels provides flexibility in system design and implementation, enabling the use of optimal protocols for specific network segments or requirements.

In a second aspect, a first device for quantum key distribution with a second device is provided. The first device is configured to: generate a another first set of symbols substantially similar to a first second set of symbols generated at the second intermediary device, wherein the first set of symbols and the another first set of symbols have been generated based on first information exchanged between the second intermediate device and the first device over a first quantum channel; exchange administrative information with the second device over the second non-quantum channel; and correlate symbols from the another first set of symbols with a fourth set of symbols generated at the second device based on the exchanged administrative information; wherein the fourth set of symbols is generated at the second device based on performing an operation using another second set of symbols generated at the second device and a third set of symbols received from a first intermediate device, and wherein the third set of symbols is generated at the first intermediate device based on performing an operation using the first set of symbols received from the second intermediate device and a second set of symbols generated at the first intermediate device.

This configuration enables end-to-end quantum key distribution between two devices through intermediate devices, allowing for secure key generation over extended distances while maintaining the security benefits of quantum communication, as the result of this configuration is that the correlated fourth set of symbols at the second device is substantially the same as the another first set of symbols at the first device. Subsequently, the first and second device can perform further QKD processing (e.g. sifting, information reconciliation, error correction, privacy amplification) to generate a fifth set of symbols at first device, and another fifth set of symbols at the second devices, where said fifth set of symbols and said another fifth set of symbols are exactly the same, and can be used as shared secret keys between communicating parties.

In a third aspect, a second device for quantum key distribution with a first device is provided. The second device is configured to: generate another second set of symbols based on second information exchanged with a first intermediate device over a second quantum channel; receive a third set of symbols from the first intermediate device over a third non-quantum channel; generate a fourth set of symbols based on performing an operation using the another second set of symbols and the third set of symbols; exchange administrative information with the first device over a second non-quantum channel; and correlate symbols from the fourth set of symbols with another first set of symbols generated at the first device based on the exchanged administrative information; wherein the third set of symbols is generated at the first intermediate device based on performing an operation using a first set of symbols received from a second intermediate device and a second set of symbols generated at the first intermediate device, and wherein the first set of symbols is substantially similar to the another first set of symbols generated at the first device.

This configuration allows the second device to participate in secure quantum key distribution with the first device through intermediate devices, enabling the generation of shared secret keys over extended distances, as the result of this configuration is that the correlated fourth set of symbols at the second device is substantially the same as the another first set of symbols at the first device. Subsequently, the first and second device can perform further QKD processing (e.g. sifting, information reconciliation, error correction, privacy amplification) to generate a fifth set of symbols at first device, and another fifth set of symbols at the second devices, where said fifth set of symbols and said another fifth set of symbols are exactly the same, and can be used as shared secret keys between communicating parties.

In a fourth aspect, a second intermediate device for quantum key distribution between a first device and a second device is provided. The second intermediate device is configured to: exchange first information with the first device over a first quantum channel; generate a first set of symbols based on the exchanged first information, wherein the first set of symbols is substantially similar to another first set of symbols generated at the first device; transmit the first set of symbols to a first intermediate device over a first trusted non-quantum channel; wherein the first intermediate device is configured to: generate a second set of symbols substantially similar to another second set of symbols generated at the second device, generate a third set of symbols based on performing an operation using the first set of symbols and the second set of symbols, and transmit the third set of symbols to the second device; wherein the second device is configured to generate a fourth set of symbols based on performing an operation using the another second set of symbols and the third set of symbols; and wherein the first device and the second device are configured to exchange administrative information over a second non-quantum channel, to correlate symbols from the fourth set of symbols at the second device and the another first set of symbols at the first device.

This configuration enables the second intermediate device to participate in the quantum key distribution process, facilitating secure key generation between the first and second devices over extended distances, as the result of this configuration is that the correlated fourth set of symbols at the second device is substantially the same as the another first set of symbols at the first device. Subsequently, the first and second device can perform further QKD processing (e.g. sifting, information reconciliation, error correction, privacy amplification) to generate a fifth set of symbols at first device, and another fifth set of symbols at the second devices, where said fifth set of symbols and said another fifth set of symbols are exactly the same, and can be used as shared secret keys between communicating parties.

In a fifth aspect, a method for a first intermediate device for quantum key distribution between a first device and a second device is provided. The method comprises: receiving, over a first trusted non-quantum channel from a second intermediate device, a first set of symbols generated at the second intermediate device, wherein the first set of symbols is substantially similar to another first set of symbols generated at the first device, and wherein the first set of symbols and the another first set of symbols have been generated based on first information exchanged between the second intermediate device and the first device over a first quantum channel; generating a second set of symbols substantially similar to another second set of symbols generated at the second device, wherein the second set of symbols and the another second set of symbols have been generated based on second information exchanged between the first intermediate device and the second device over a second quantum channel; generating a third set of symbols based on performing an operation using the first set of symbols and the second set of symbols; and transmitting the third set of symbols to the second device over a third non-quantum channel; wherein the second device is configured to generate a fourth set of symbols based on performing an operation using the another second set of symbols and the third set of symbols; and wherein the first device and the second device are configured to exchange administrative information over the second non-quantum channel, to correlate symbols from the fourth set of symbols at the second device and the another first set of symbols at the first device.

This method enables secure quantum key distribution over extended distances by utilizing intermediate devices, while maintaining end-to-end security between the first and second devices, as the result of this configuration is that the correlated fourth set of symbols at the second device is substantially the same as the another first set of symbols at the first device. Subsequently, the first and second device can perform further QKD processing (e.g. sifting, information reconciliation, error correction, privacy amplification) to generate a fifth set of symbols at first device, and another fifth set of symbols at the second devices, where said fifth set of symbols and said another fifth set of symbols are exactly the same, and can be used as shared secret keys between communicating parties.

In a sixth aspect, a method for a second intermediate device for quantum key distribution between a first device and a second device is provided. The method comprises: exchanging first information with the first device over a first quantum channel; generating a first set of symbols based on the exchanged first information, wherein the first set of symbols is substantially similar to another first set of symbols generated at the first device; transmitting the first set of symbols to a first intermediate device over a first trusted non-quantum channel; wherein the first intermediate device is configured to: generate a second set of symbols substantially similar to another second set of symbols generated at the second device, generate a third set of symbols based on performing an operation using the first set of symbols and the second set of symbols, and transmit the third set of symbols to the second device; wherein the second device is configured to generate a fourth set of symbols based on performing an operation using the another second set of symbols and the third set of symbols; and wherein the first device and the second device are configured to exchange administrative information over a second non-quantum channel, to correlate symbols from the fourth set of symbols at the second device and the another first set of symbols at the first device.

This method allows the second intermediate device to participate in the quantum key distribution process, facilitating secure key generation between the first and second devices over extended distances, as the result of this configuration is that the correlated fourth set of symbols at the second device is substantially the same as the another first set of symbols at the first device. Subsequently, the first and second device can perform further QKD processing (e.g. sifting, information reconciliation, error correction, privacy amplification) to generate a fifth set of symbols at first device, and another fifth set of symbols at the second devices, where said fifth set of symbols and said another fifth set of symbols are exactly the same, and can be used as shared secret keys between communicating parties.

In a seventh aspect, a system for quantum key distribution between a first device and a second device is provided. The system comprises the first intermediate device of the first aspect, the second intermediate device of the fourth aspect, the first device of the second aspect and the second device of the third aspect.

This comprehensive system integrates all components necessary for secure quantum key distribution over extended distances, utilizing intermediate devices while maintaining end-to-end security between the first and second devices, as the result of this comprehensive system is that the correlated fourth set of symbols at the second device is substantially the same as the another first set of symbols at the first device. Subsequently, the first and second device can perform further QKD processing (e.g. sifting, information reconciliation, error correction, privacy amplification) to generate a fifth set of symbols at first device, and another fifth set of symbols at the second devices, where said fifth set of symbols and said another fifth set of symbols are exactly the same, and can be used as shared secret keys between communicating parties.

### BRIEF DESCRIPTION OF FIGURES

Embodiments of the invention will be described, by way of example, with reference to the following drawings, in which:
Fig. 1 illustrates a block diagram of a quantum key distribution system, according to aspects of the present disclosure.
Fig. 2 illustrates another block diagram of a quantum key distribution system, according to an embodiment.
Fig. 3 illustrates a flowchart of a method for quantum key distribution process, in accordance with example embodiments.

Common reference numerals are used throughout the figures to indicate similar features.

### DETAILED DESCRIPTION

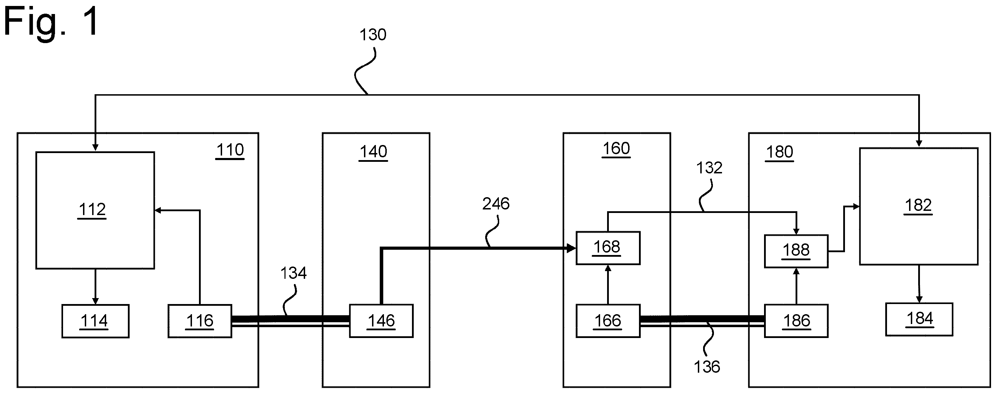

The quantum key distribution (QKD) system shown in FIG. 1 comprises multiple devices and channels for secure key exchange. A first device 110 and a second device 180 represent end nodes of the QKD system. The system includes a first intermediate device 160 and a second intermediate device 140 positioned between the first device 110 and the second device 180.

A first quantum channel 134 connects the first device 110 and the second intermediate device 140. A second quantum channel 136 connects the first intermediate device 160 and the second device 180. These quantum channels enable the exchange of quantum information between the connected devices, and hence the generation of sets of symbols at the two ends of a quantum channel that are substantially the same. Each quantum channel includes an associated classical channel that is used for coordination, synchronisation and administrative purposes.

The system also incorporates non-quantum channels for classical communication. A second non-quantum channel 130 facilitates communication between the first device 110 and the second device 180. A third non-quantum channel 132 enables communication between the first intermediate device 160 and the second device 180.

A first trusted non-quantum channel 246 connects the first intermediate device 160 and the second intermediate device 140. This channel allows secure classical communication between the intermediate devices.

In operation, the first intermediate device 160 and the second device 180 perform operations on sets of symbols, for example, raw or sifted bits generated at their ends of a quantum channel, rather than on fully processed keys. These operations may include exclusive OR (XOR) operations on the received sets of symbols.

The intermediate devices may also transmit information about the measurement bases used for quantum key distribution, if raw (not-sifted) bits are operated upon. This information allows the first device 110 and the second device 180 to correlate their measurements with measurements at the second intermediary device 140 and the first intermediary device 160, and generate secure keys. Alternatively, information about measurement bases is exchanged as part of first information via the classical channel associated with the first quantum channel, and as part of second information via the classical channel associated with the second quantum channel. In that case, sifting (removing QKD measurements that were performed in different bases) is performed locally between first device and second intermediary device, and between first intermediary device and second device.

By utilizing this configuration of devices and channels, the QKD system enables secure key distribution between the first device 110 and the second device 180, even over long distances that may exceed the limitations of a single quantum link.

FIG. 1 illustrates a quantum key distribution (QKD) system comprising a first device 110 and a second device 180. The first device 110 includes a first main QKD processing means 112, a first key managing means 114, and a first secondary QKD processing means 116. The second device 180 includes a second main QKD processing means 182, a second key managing means 184, and a second secondary QKD processing means 186.

The first secondary QKD processing means 116 of the first device 110 is configured to generate a another first set of symbols based on first information exchanged with the second intermediate device 140 over the first quantum channel 134. The first main QKD processing means 112 is configured to generate a fifth set of symbols and pass this to the first key-managing means 114. Said fifth set of symbols is generated based on the another first set of symbols and administrative coordination with second device 180 via the second non-quantum channel 130, which includes correlation of symbols from the another first set of symbols with a fourth set of symbols generated at the second device 180 based on the exchanged administrative information.

In the second device 180, the second secondary QKD processing means 186 is configured to generate another second set of symbols based on second information exchanged with the first intermediate device 160 over the second quantum channel 136. The second symbol operating means 188 is configured to receive the another second set of symbols from the second secondary QKD processing means 186, to receive, via the third non-quantum channel 132, the third set of symbols from the first intermediate device 160, and to generate a fourth set of symbols based on performing an operation using the another second set of symbols and the third set of symbols. The third set of symbols has been generated by the first symbol operating means 168 of the first intermediate device 160 based on performing an operation using the second set of symbols and the first set of symbols.

The second main QKD processing means 182 is configured to generate a another fifth set of symbols and pass this to the second key-managing means 184. Said another fifth set of symbols is generated based on the fourth set of symbols and administrative coordination with first device 110 via the second non-quantum channel 130, which includes correlation of symbols from the fourth set of symbols with another first set of symbols generated at the first device 110 based on the exchanged administrative information.

The second main QKD processing means 182 is configured to correlate symbols from the fourth set of symbols with the another first set of symbols generated at the first device 110 based on the exchanged administrative information over the second non-quantum channel. The another first set of symbols generated by the first device 110 is substantially similar to the first set of symbols generated at the first device 110. As said, the second main QKD processing means 182 generates the another fifth set of symbols, based on the fourth set of symbols and the exchanged administrative information assures that the another fifth set of symbols is identical to the fifth set of symbols generated at the first device 110.

These components and their configurations enable the first device 110 and the second device 180 to perform quantum key distribution through the intermediate devices, utilizing both quantum and non-quantum channels for secure key distribution and administrative coordination.

The first intermediate device 160 and the second intermediate device 140 play a crucial role in facilitating secure quantum key distribution between the first device 110 and the second device 180. These intermediate devices enable the extension of quantum key distribution over longer distances by acting as trusted nodes in the QKD network.

The first intermediate device 160 includes a third secondary QKD processing means 166, a first symbol operating means 168. The second intermediate device 140 includes a fourth secondary QKD processing means 146. These components enable the intermediate devices to process and relay quantum key information between the end devices without having access to the final quantum key.

The second intermediate device 140 exchanges first information with the first device 110 over the first quantum channel 134. Based on this exchanged first information, the fourth secondary QKD processing means 146 generates a first set of symbols. This first set of symbols is substantially similar to another first set of symbols generated at the first device 110. The second intermediate device 140 then transmits the first set of symbols to the first intermediate device 160 over the first trusted non-quantum channel 246. The similarity may be based on a certain threshold. For instance, the first set of symbols may be more than a certain percent identical to the another first set of symbols generated at the first device 110. As a non-limiting example, the first set of symbols may be more than 90 % identical to the another first set of symbols generated at the first device 110. Any suitable per cent above 50% may be chosen.

Upon receiving the first set of symbols from the second intermediate device 140, the first intermediate device 160 processes this information using the first symbol operating means 168. Concurrently, s intermediate device 160 generates a second set of symbols based on second information exchanged with the second device 180 over the second quantum channel 136. This second set of symbols is substantially similar to another second set of symbols generated at the second device 180 in a similar way as explained with respect to the first set of symbols. That is, the similarity may be based on a certain threshold. For instance, the second set of symbols may be more than a certain percent identical to the another second set of symbols generated at the second device 180. As a non-limiting example, the second set of symbols may be more than 90 % identical to the another second set of symbols. Again, any suitable per cent above 50% may be chosen.

The first symbol operating means 168 of the first intermediate device 160 then generates a third set of symbols by performing an operation using the first set of symbols and the second set of symbols. This operation may be, for example, an exclusive OR (XOR) operation or another suitable logical operation.

After generating the third set of symbols, the first symbol operating means 168 of the first intermediate device 160 transmits the third set of symbols to the second device 180 over the third non-quantum channel 132.

As said, at the second device 180, the second symbol operating means 188 generates a fourth set of symbols based on performing an operation using the another second set of symbols (generated at the second device 180) and the third set of symbols received from the first intermediate device 160.

This process allows for the secure distribution of quantum key material between the first device 110 and the second device 180, even when these devices are separated by distances greater than what can be achieved with a single quantum link. The intermediate devices 140 and 160 effectively extend the range of the QKD system while maintaining the security properties of quantum key distribution.

The quantum key distribution (QKD) system utilizes various communication channels to facilitate secure key exchange between the first device 110 and the second device 180. These channels can be broadly categorized into quantum channels and non-quantum channels, each serving a specific purpose in the QKD process.

The first quantum channel 134 connects the first device 110 and the second intermediate device 140, while the second quantum channel 136 connects the first intermediate device 160 and the second device 180. These quantum channels enable the exchange of quantum states, such as polarized photons, which form the basis of the QKD protocol. The first quantum channel 134 and the second quantum channel 136 may use different quantum key distribution protocols, allowing for flexibility in the system design and potentially enhancing security through protocol diversity.

The non-quantum channels in the system are used for classical communication and include the second non-quantum channel 130, the third non-quantum channel 132, and the first trusted non-quantum channel 246. The second non-quantum channel 130 facilitates communication between the first device 110 and the second device 180. This channel is used for exchanging administrative information necessary for the QKD process, such as correlation between the another first set of symbols and the fourth set of symbols, and measurement basis reconciliation data.

The third non-quantum channel 132 enables communication between the first intermediate device 160 and the second device 180. This channel is used for transmitting the third set of symbols from the first intermediate device 160 to the second device 180.

The first trusted non-quantum channel 246 connects the first intermediate device 160 and the second intermediate device 140. This channel may comprise a cryptographically protected channel, ensuring secure communication between the intermediate devices. The cryptographic protection adds an extra layer of security to the classical information exchanged between these trusted nodes.

The combination of quantum and non-quantum channels allows for the transmission of both quantum states and classical information, which is essential for the QKD process. The quantum channels carry the quantum information used to generate raw or sifted symbols, while the non-quantum channels are used for the subsequent processing and correlation of these symbols.

The first set of symbols and/or the third set of symbols transmitted over the non-quantum channels may comprise, respectively based on, sifted symbols and/or raw symbols. Sifted symbols are those that remain after the initial filtering process in QKD, where measurements made in incompatible bases are discarded. Raw symbols, on the other hand, are the direct results of quantum measurements before any post-processing.

The exchange of administrative information over the second non-quantum channel 130 between the first device 110 and the second device 180 is a crucial step in the QKD process. This information exchange allows the devices to correlate symbols from the fourth set of symbols at the second device 180 and the another first set of symbols at the first device 110. This correlation process is essential for generating the final secure key (the fifth set of symbols, identical to the another fifth set of symbols) that can be used for cryptographic purposes.

By utilizing this combination of quantum and non-quantum channels, the QKD system can effectively distribute quantum key material over extended distances while maintaining the security properties inherent to quantum key distribution.

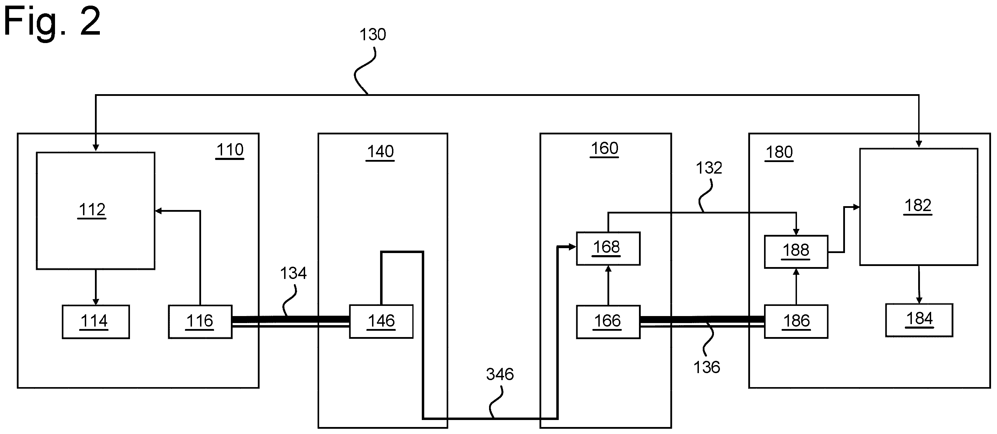

FIG. 2 illustrates an alternative configuration of the quantum key distribution (QKD) system. In this configuration, a trusted optical fiber 346 connects the first intermediate device 160 and the second intermediate device 140. The trusted optical fiber 346 serves as a first trusted non-quantum channel between the intermediate devices.

The trusted optical fiber 346 enhances the security of the QKD system by providing a dedicated, physical connection between the first intermediate device 160 and the second intermediate device 140. This configuration reduces the risk of interception or tampering with the classical information exchanged between these intermediate devices.

The trusted optical fiber 346 may contain optical amplifiers. These optical amplifiers enable the transmission of signals over longer distances without significant degradation. By incorporating optical amplifiers in the trusted optical fiber 346, the QKD system can extend its operational range, allowing for quantum key distribution over greater distances than may be achievable with a single quantum link.

The use of the trusted optical fiber 346 as the first trusted non-quantum channel provides several advantages. First, the trusted optical fiber 346 offers high performing capabilities, allowing for efficient transmission of classical information between the first intermediate device 160 and the second intermediate device 140. Second, the trusted optical fiber 346 may be less susceptible to external interference compared to other types of communication channels, potentially improving the reliability of the QKD system.

In this configuration, the first quantum channel 134 still connects the first device 110 and the second intermediate device 140, while the second quantum channel 136 connects the first intermediate device 160 and the second device 180. The second non-quantum channel 130 and the third non-quantum channel 132 remain in place for classical communication between the devices.

The first device 110, including the first main QKD processing means 112, the first key managing means 114, and the first secondary QKD processing means 116, operates in the same manner as described previously. Similarly, the second device 180, with the second main QKD processing means 182, the second key managing means 184, and the second secondary QKD processing means 186, functions as described earlier.

The first intermediate device 160, comprising the third secondary QKD processing means 166 and the first symbol operating means 168, and the second intermediate device 140, including the fourth secondary QKD processing means 146, perform their respective roles in the QKD process as described previously. However, the communication between these intermediate devices now occurs over the trusted optical fiber 346, providing an additional layer of security to the system.

By utilizing the trusted optical fiber 346 as the first trusted non-quantum channel, the QKD system can maintain secure communication between the intermediate devices while potentially extending the overall distance over which quantum key distribution can be performed.

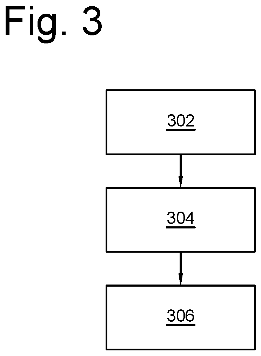

FIG. 3 illustrates a flowchart depicting the quantum key distribution (QKD) process flow in the system. The process comprises a step 302, a step 304, and a step 306.

In the step 302, the first intermediate device 160 and the second intermediate device 140 generate respectively the first set of symbols and the another first set of symbols while the first intermediate device 160 and the second device 180 generate respectively the second set of symbols and the another second set of symbols as previously explained.

The step 304 involves performing operations on sets of symbols. The first symbol operating means 168 of the first intermediate device 160 performs an operation using the first set of symbols received from the second intermediate device 140 and the second set of symbols generated based on the second quantum channel 136. The second symbol operating means 188 of the second device 180 performs an operation using the third set of symbols received from the first intermediate device 160 and the another second set of symbols generated based on the second quantum channel 136.These operations may comprise an exclusive OR (XOR) operation or a negative XOR (NXOR) operation. The result of these operation are a third set of symbol and a fourth set of symbols that combine information from quantum links without revealing the actual key material.

Before performing the XOR or NXOR operation, the first intermediate device 160 may authenticate the first set of symbols received from the second intermediate device 140. This authentication process ensures the integrity and origin of the received symbols.

The first intermediate device 160 may then encrypt the resulting set of symbols before transmitting to the second device 180 over the third non-quantum channel 132. This encryption adds an additional layer of security to the classical communication.

In the step 306, end-to-end quantum key distribution processing is conducted between the first device 110 and the second device 180. The first main QKD processing means 112 of the first device 110 and the second main QKD processing means 182 of the second device 180 perform this processing.

The end-to-end processing may include functions such as parameter estimation, information reconciliation, and privacy amplification. These functions are performed on the correlated symbols at the first device 110 and the second device 180, which are derived from the XOR or NXOR operations performed at the first intermediate device and the second device.

The system performs some QKD processing functions on a per-link basis and other on an end-to-end basis. For example, the generation of raw or sifted bits occurs on a per-link basis between each pair of adjacent devices in the QKD chain. However, the final key generation and verification processes occur on an end-to-end basis between the first device 110 and the second device 180.

This hybrid approach allows for the extension of the QKD network over longer distances while maintaining end-to-end security between the first device 110 and the second device 180, while keeping processing power of the intermediate devices limited. The intermediate devices facilitate the key distribution process without having direct access to the final key material. Note that the intermediate nodes need to act as trusted nodes, as they do carry sensitive sets of symbols. In the following part of the description, and as a non-limiting example, it will be considered that the set of symbols relate to sets of bits. However, the sets of symbols may comprise any other symbol. Table 1 provides details how the third set of symbols is sent/signaled over the third non-quantum channel 132 to the second device 180. The first row in Table 1 is (136, 85, 0) and relates to the 136th bit of the first set of symbols, and the 85th bit of the second set of symbols, and that the XOR operation performed between those two bits at the first symbol operating means 168 is zero. In this way, the third set of symbols sent over the third non-quantum channel 132 for the first row would be 00111, i.e. the rows of the third column containing the result of the different XOR operations.

An example of the XOR message format over the third non-quantum channel 132 used in the invention is presented in Table 1. This table illustrates the structure and content of messages exchanged between devices in the quantum key distribution (QKD) system.

**Table 1**

| Identifier of bits from the first set of symbols | Identifier of bits from the second set of symbols | XOR value, resulting from the XOR operation on the identified bit from the first set of symbols and the identified bit from the second set of symbols |
|---|---|---|
| 136 | 85 | 0 |
| 258 | 103 | 0 |
| 270 | 250 | 1 |
| 315 | 254 | 1 |
| 400 | 331 | 1 |

As said, Table 1 comprises three columns, the first column is labelled as " Identifier of bits from the first set of symbols", the second column is labelled as " Identifier of bits from the second set of symbols" and the third column is labelled as " XOR value, resulting from the XOR operation on the identified bit from the first set of symbols and the identified bit from the second set of symbols"

The first column contains identifiers for bits from the first set of symbols. These identifiers may be, for example, sequential numbers or timestamps associated with a qubit measurement.

The second column contains similar identifiers for bits from the second set of symbols.

The third column presents the result of performing an exclusive OR (XOR) operation between the corresponding bits from the two sets of symbols.

This XOR message format contributes to the security and efficiency of the QKD system in several ways. First, by using XOR operations, the system combines information from two separate quantum channels without revealing the actual bit values. This preserves the confidentiality of the individual measurements while allowing for end-to-end key correlation.

Second, the use of unique identifiers for each bit ensures proper correlation between the different devices in the QKD network. This correlation is crucial for correct key generation and error correction processes.

Third, the compact format of the XOR message allows for efficient communication between devices, minimizing the bandwidth requirements for non-quantum (classical) channels in the QKD system.

In some examples, the system may use XNOR (negative XOR) operations instead of XOR operations. The XNOR operation provides similar benefits to the XOR operation in terms of combining information from multiple quantum channels while maintaining security. The choice between XOR and XNOR operations may depend on specific implementation requirements or preferences of the QKD system design.

The quantum key distribution (QKD) system may utilize an enhanced XOR message format over the third non-quantum channel 132 that includes basis information. Table 2 illustrates an example of this enhanced format:

**Table 2**

| Identifier of bits from the first set of symbols | Identifier of bits from the first set of symbols | Second intermediate device basis for measurement | First intermediate device basis for measurement | XOR value, resulting from the XOR operation on the identified bit from the first set of symbols and the identified bit from the second set of symbols |
|---|---|---|---|---|
| 141 | 103 | X | X | 1 |
| 150 | 104 | + | X | 1 |
| 173 | 250 | + | + | 1 |
| 258 | 251 | X | + | 0 |
| 259 | 331 | + | + | 1 |

This enhanced format includes information about the measurement bases used by the intermediate devices. The additional columns indicate the basis (X or +) selected by each intermediate device for measurements on their respective sides of the QKD links. Here "+" may indicate that the measurement basis was horizontal/vertical polarization, whereas "X" may indicate that the measurement basis was +45/-45 degrees polarization.

By including basis information in the XOR message, the system enables improved sifting and acceptance of raw qubits.

The removing the sifting operation from the intermediary devices further lowers their implementation and operation complexity.

In some examples, the system associates raw or sifted keys with service identifiers for different cryptographic services. This association allows the system to manage multiple cryptographic services simultaneously, each with its own set of keys and parameters. For instance, a service identifier may be assigned to a specific selection of raw or sifted keys, indicating that these keys are to be used exclusively for a particular cryptographic service.

The association of keys with service identifiers enables the system to provide customized cryptographic services to different customers or applications. Each service may have its own cryptographic key parameters and settings for the key generation process, tailored to the specific security requirements of that service.

In some examples, the system includes a third intermediate device to enable a star network topology. The addition of a third intermediate device expands the QKD network beyond a simple point-to-point configuration, allowing for connections between multiple end devices. In a star topology, the third intermediate device may act as a central hub, facilitating quantum key distribution between various pairs of end devices.

The star network topology enabled by the third intermediate device allows for more flexible and scalable QKD networks. For example, raw or sifted keys associated with different service identifiers may be distributed along different paths in the star network. This configuration supports location-dependent cryptographic services, where the key generation process and parameters can be adjusted based on the specific requirements of each network branch or end device location.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognize that numerous further modifications and combinations of various aspects are possible. Accordingly, the described aspects are intended to encompass all such alterations, modifications, and variations that fall within the scope of the appended claims.

## Claims

1. A first intermediate device (160) for quantum key distribution between a first device (110) and a second device (180), the first intermediate device (160) configured to:
receive, over a first trusted non-quantum channel (246; 346) from a second intermediate device (140), a first set of symbols generated at the second intermediate device (140), wherein the first set of symbols is substantially similar to another first set of symbols generated at the first device (110), and wherein
the first set of symbols and the another first set of symbols have been generated based on first information exchanged between the second intermediate device (140) and the first device (110) over a first quantum channel (134);
generate a second set of symbols substantially similar to another second set of symbols generated at the second device (180), wherein the second set of symbols and the another second set of symbols have been generated based on second information exchanged between the first intermediate device (160) and the second device (110) over a second quantum channel (136);
generate a third set of symbols based on performing an operation using the first set of symbols and the second set of symbols; and
transmit the third set of symbols to the second device (180) over a third non-quantum channel (132);
wherein the second device (180) is configured to generate a fourth set of symbols based on performing an operation using the another second set of symbols and the third set of symbols; and
wherein the first device (110) and the second device (180) are configured to exchange administrative information over the second non-quantum channel (130), to correlate symbols from the fourth set of symbols at the second device (180) and the another first set of symbols at the first device (110).

2. The first intermediate device (160) of claim 1, wherein the first set of symbols and/or the second set of symbols comprises sifted symbols and/or raw symbols.

3. The first intermediate device (160) of any of the previous claims, wherein the first trusted non-quantum channel (346) may comprise a trusted optical fiber.

4. The first intermediate device (160) of any of the previous claims, wherein the first trusted non-quantum channel (346) may comprise a cryptographically protected channel (246).

5. The first intermediate device (160) of any of the previous claims, wherein the operation performed comprises an exclusive OR, XOR, operation and/or a negative XOR, NXOR, operation.

6. The first intermediate device (160) of any of the previous claims, wherein the first intermediate device (160) may be further configured to perform error correction and/or privacy amplification on the second set of symbols.

7. The first intermediate device (160) of any of the previous claims, wherein the first intermediate device (160) may be further configured to authenticate the first set of symbols received from the second intermediate device (140).

8. The first intermediate device (160) of any of the previous claims, wherein the first intermediate device (160) may be further configured to encrypt the third set of symbols before transmitting to the second device (180).

9. The first intermediate device (160) of any of the previous claims, wherein the first quantum channel (134) and the second quantum channel (136) may use different quantum key distribution protocols.

10. A first device (110) for quantum key distribution with a second device (180), the first device (110) configured to:
generate a another first set of symbols substantially similar to a first second set of symbols generated at the second intermediary device, wherein the first set of symbols and the another first set of symbols have been generated based on first information exchanged between the second intermediate device and the first device over a first quantum channel (134);
exchange administrative information with the second device (180) over the second non-quantum channel (130); and
correlate symbols from the another first set of symbols with a fourth set of symbols generated at the second device (180) based on the exchanged administrative information;
wherein the fourth set of symbols is generated at the second device (180) based on performing an operation using another second set of symbols generated at the second device (180) and a third set of symbols received from a first intermediate device (160), and
wherein the third set of symbols is generated at the first intermediate device (160) based on performing an operation using the first set of symbols received from the second intermediate device (140) and a second set of symbols generated at the first intermediate device (160).

11. A second device (180) for quantum key distribution with a first device (110), the second device (180) configured to:
generate another second set of symbols based on second information exchanged with a first intermediate device (160) over a second quantum channel (136);
receive a third set of symbols from the first intermediate device (160) over a third non-quantum channel (132);
generate a fourth set of symbols based on performing an operation using the another second set of symbols and the third set of symbols;
exchange administrative information with the first device (110) over a second non-quantum channel (130); and
correlate symbols from the fourth set of symbols with another first set of symbols generated at the first device (110) based on the exchanged administrative information;
wherein the third set of symbols is generated at the first intermediate device (160) based on performing an operation using a first set of symbols received from a second intermediate device (140) and a second set of symbols generated at the first intermediate device (160), and
wherein the first set of symbols is substantially similar to the another first set of symbols generated at the first device (110).

12. A second intermediate device (140) for quantum key distribution between a first device (110) and a second device (180), the second intermediate device (140) configured to:
exchange first information with the first device (110) over a first quantum channel (134);
generate a first set of symbols based on the exchanged first information, wherein the first set of symbols is substantially similar to another first set of symbols generated at the first device (110);
transmit the first set of symbols to a first intermediate device (160) over a first trusted non-quantum channel (246);
wherein the first intermediate device (160) is configured to:
generate a second set of symbols substantially similar to another second set of symbols generated at the second device (180),
generate a third set of symbols based on performing an operation using the first set of symbols and the second set of symbols, and
transmit the third set of symbols to the second device (180);
wherein the second device (180) is configured to generate a fourth set of symbols based on performing an operation using the another second set of symbols and the third set of symbols; and
wherein the first device (110) and the second device (180) are configured to exchange administrative information over a second non-quantum channel (130), to correlate symbols from the fourth set of symbols at the second device (180) and the another first set of symbols at the first device (110).

13. A method for a first intermediate device (160) for quantum key distribution between a first device (110) and a second device (180), the method comprising:
receiving, over a first trusted non-quantum channel (246) from a second intermediate device (140), a first set of symbols generated at the second intermediate device (140), wherein the first set of symbols is substantially similar to another first set of symbols generated at the first device (110), and wherein
the first set of symbols and the another first set of symbols have been generated based on first information exchanged between the second intermediate device (140) and the first device (110) over a first quantum channel (134);
generating a second set of symbols substantially similar to another second set of symbols generated at the second device (180), wherein the second set of symbols and the another second set of symbols have been generated based on second information exchanged between the first intermediate device (160) and the second device (180) over a second quantum channel (136);
generating a third set of symbols based on performing an operation using the first set of symbols and the second set of symbols; and
transmitting the third set of symbols to the second device (180) over a third non-quantum channel (132);
wherein the second device (180) is configured to generate a fourth set of symbols based on performing an operation using the another second set of symbols and the third set of symbols; and
wherein the first device (110) and the second device (180) are configured to exchange administrative information over the second non-quantum channel (130), to correlate symbols from the fourth set of symbols at the second device (180) and the another first set of symbols at the first device (110).

14. A method for a second intermediate device (140) for quantum key distribution between a first device (110) and a second device (180), the method comprising:
exchanging first information with the first device (110) over a first quantum channel (134);
generating a first set of symbols based on the exchanged first information, wherein the first set of symbols is substantially similar to another first set of symbols generated at the first device (110);
transmitting the first set of symbols to a first intermediate device (160) over a first trusted non-quantum channel (246);
wherein the first intermediate device (160) is configured to:
generate a second set of symbols substantially similar to another second set of symbols generated at the second device (180),
generate a third set of symbols based on performing an operation using the first set of symbols and the second set of symbols, and
transmit the third set of symbols to the second device (180);
wherein the second device (180) is configured to generate a fourth set of symbols based on performing an operation using the another second set of symbols and the third set of symbols; and
wherein the first device (110) and the second device (180) are configured to exchange administrative information over a second non-quantum channel (130), to correlate symbols from the fourth set of symbols at the second device (180) and the another first set of symbols at the first device (110).

15. A system for quantum key distribution between a first device (110) and a second device (180), the system comprising the first intermediate device (160) of claim 1, the second intermediate device (140) of claim 12, the first device (110) of claim 10 and the second device (180) of claim 12.
